# EUROPÄISCHE PATENTSCHRIFT

(11) **EP 1 223 069 B1**
(45) Veröffentlichungstag und Bekanntmachung des Hinweises auf die Patenterteilung: **18.01.2006**
(21) Anmeldenummer: 01128168.0
(22) Anmeldetag: 27.11.2001
(51) Int. Cl.: B60K 17/10, B60K 23/08

(54) **Traktionssteuersystem und Verfahren zur Traktionssteuerung für ein hydrostatisch angetriebenes Fahrzeug**
Device and method for propulsion control of a hydrostatically driven vehicle
Dispositif et procédé de commande de propulsion pour véhicule à transmission hydrostatique

(30) Priorität: 16.01.2001 DE 10101748
(43) Veröffentlichungstag der Anmeldung: 17.07.2002
(73) Patentinhaber: Brueninghaus Hydromatik GmbH, 89275 Elchingen (DE)
(72) Erfinder: Misselwitz, Sigurd, 89428 Syrgenstein (DE)
(74) Vertreter: Körfer, Thomas

(56) Entgegenhaltungen:
- EP-A- 0 765 773
- EP-A- 0 985 592
- WO-A-92/18345
- DE-A- 3 145 218
- DE-A- 4 226 453
- DE-A- 19 638 421
- US-A- 5 199 525

## Beschreibung

Die Erfindung geht aus von einem Traktionssteuersystem nach dem Oberbegriff des Anspruchs 1, der in der WO-A-92/18345 offenbart ist. Dieses Traktionssteuersystem erkennt durch den Verlauf der Signale von Drucksensoren die Fahrsituation als Bergfahrt oder Talfahrt.

Traktionssteuersysteme für hydrostatisch angetriebene Fahrzeuge, bei denen mehr als eine Achse angetrieben ist, sind bekannt. In der DE 196 38 421 C2 ist ein System offenbart, bei dem zwei Achsen angetrieben sind. Dabei wird von einer gemeinsamen Hydropumpe für jede Achse jeweils ein Hydromotor angetrieben. Die Hydropumpe ist mit einem Verbrennungsmotor als Antriebsquelle verbunden. Jeder Hydromotor verfügt über einen Impulsgeber zur Ermittlung der jeweiligen Drehzahl des Hydromotors und damit der Achsdrehzahl. Aus den einzelnen Drehzahlen der Hydromotoren wird mit dem entsprechenden Fahrradius eines Rades die Lineargeschwindigkeit des jeweiligen Umfangs ermittelt. Bei Abweichungen der Lineargeschwindigkeiten voneinander stellt das System einen Schlupf fest und reduziert den Schwenkwinkel des Hydromotors, der die Achse mit der größeren Lineargeschwindigkeit antreibt.

Bei Talfahrt tritt der Radschlupf an dem Rad auf, das die kleinere Lineargeschwindigkeit aufweist. Eine Ansteuerung des Hydromotors des Rades mit der größeren Lineargeschwindigkeit zu kleineren Schwenkwinkeln hin hätte eine Verringerung der Bremswirkung zur Folge. Ein Gefällesensor, der ab einem Neigungswinkel von 7° anspricht, ist an dem Steuergerät angeschlossen, so daß bei einer Talfahrt die oben beschriebene Verstellung in Richtung kleiner Schwenkwinkel verhindert wird.

Die Neigung, bei der der Gefällesensor anspricht, ist fest eingestellt. Dadurch kann eine Anpassung an veränderte Einsatzbedingungen, die eine andere Ansprechschwelle erforderlich machen, nicht erfolgen. Weiterhin wird durch das System keine präventive Verstellung vorgenommen, so daß erst bei einem Durchrutschen einer der Antriebsachsen in den Schwenkwinkel eingegriffen wird.

Der Erfindung liegt die Aufgabe zugrunde, die Tendenz zum Auftreten von Schlupf durch eine der jeweiligen Fahrsituation angepaßte präventive Verstellung der Schwenkwinkel der Hydromotoren zu verringern und sowohl bei Bergfahrt als auch bei Talfahrt eine Momentenanpassung der Hydromotoren vorzunehmen.

Die Aufgabe wird durch das erfindungsgemäße Traktionssteuersystem mit den kennzeichnenden Merkmalen des Anspruchs 1 und das Verfahren mit den Verfahrensschritten nach Anspruch 9 gelöst.

Die Verwendung von Drucksensoren in den Hauptleitungen des hydraulischen Antriebs hat den Vorteil, daß eine Erkennung des Lastzustandes einfach möglich ist. Entsprechend dem erkannten Lastzustand des Systems wird die Momentenverteilung der angetriebenen Achsen angepaßt. Dadurch wird das Auftreten von Schlupf verringert. Das Auswerten der Signale berücksichtigt dabei nicht nur die aktuellen Drehzahlistwerte und die Fahrhebelposition, sondern den zeitlichen Verlauf zumindest der Fahrhebelposition, der eine eindeutige Zuordnung der Fahrsituation ermöglicht.

Gemäß den in den Unteransprüchen aufgeführten Maßnahmen sind vorteilhafte Weiterbildungen des Traktionssteuersystems und des Verfahrens möglich.

Vorteilhaft ist insbesondere, daß sowohl bei erkannter Bergfahrt als auch bei erkannter Talfahrt eine Schwenkwinkelverringerung des bergseitigen Hydromotors erfolgt. Ist eine ausreichende Anpassung der übertragenen. Momente durch den bergseitigen Hydromotor alleine nicht möglich, greift zusätzlich zu der Steuerung eine Regelung ein, die eine entstehende Änderung des Drehzahlverhältnisses erfaßt und den Hydromotor der talseitigen Antriebsachse verschwenkt. Besonders vorteilhaft ist eine Ausgestaltung bei der die Hydropumpe in die Steuerung mit einbezogen ist, so daß die gewünschte Fahrgeschwindigkeit eingehalten wird.

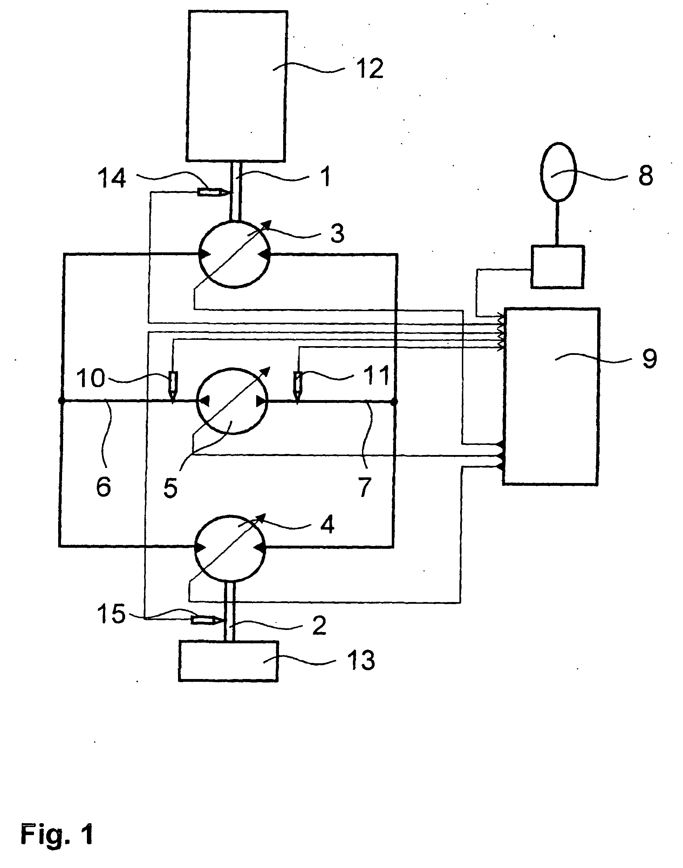

Das erfindungsgemäße Traktionssteuersystem und das erfindungsgemäße Verfahren werden anhand eines Ausführungsbeispiels, das in Fig. 1 dargestellt ist, im folgenden erläutert. Es zeigt:
- Fig. 1: eine schematische Darstellung eines Ausführungsbeispiels eines erfindungsgemäßen Traktionssteuersystems.

In Fig. 1 sind die wesentlichen Bauteile des erfindungsgemäßen Traktionsteuersystem schematisch dargestellt. Eine erste Abtriebswelle 1 ist dabei zum Antrieb einer Bandage 12 vorgesehen und eine zweite Abtriebswelle 2 wirkt auf eine zweite angetriebene Achse eines nicht dargestellten Fahrzeugs und treibt zwei Räder 13 über ein Differentialgetriebe an. Zur Verbesserung der Darstellbarkeit wird auf eine fahrzeuggerechte Anordnung der Komponenten, insbesondere der Hydromotoren 3 und 4 und Achsen verzichtet. Die Abtriebswellen 12 und 13 sind mit einem ersten bzw. zweiten Hydromotor 3 und 4 verbunden. Die Hydromotoren 3 und 4 sind parallel an eine gemeinsame Hydropumpe 5 angeschlossen, die durch eine nicht dargestellte Antriebsquelle betrieben wird. Gewöhnlich wird als Antriebsquelle z. B. eine Dieselbrennkraftmaschine eingesetzt.

Die Hydropumpe 5 ist zur Förderung von Hydraulikfluid in beiden Richtungen vorgesehen. Ausgehend von einer Neutralstellung mit Förderleistung Null ist die Hydropumpe in zwei Richtungen um einen maximalen Schwenkwinkel αₘ verschwenkbar. Die Schwenkwinkeleinstellung wird durch eine Steuergröße von einer elektronischen Steuereinheit 9 an die Verstellvorrichtung der Hydropumpe 5 übermittelt. Das von der Hydropumpe 5 geförderte Hydraulikfluid wird je nach Förderrichtung in eine Hauptleitung 6 oder 7 gepumpt. Durch eine Verzweigung der Hauptleitung 6 und 7 wird der Volumenstrom auf die beiden Hydromotoren 3 und 4 aufgeteilt.

Die beiden Hydromotoren 3 und 4 sind ebenfalls ausgehend von einer Neutralstellung in beide Richtungen bis zu einem maximalen Schwenkwinkel βₘ verschwenkbar. Die Schwenkwinkel der Hydromotoren 3 und 4 sind unabhängig voneinander einstellbar und werden von der elektronischen Steuereinheit 9 festgelegt.

Zur Vorgabe einer Fahrgeschwindigkeit oder eines Beschleunigungs- oder Verzögerungswunsches dient ein Fahrhebel 8, dessen Signal an die elektronische Steuereinheit 9 übermittelt wird. Bei normalem Fahrbetrieb (ohne auftretenden Schlupf) werden die Schwenkwinkel der Hydropumpe 5 und der Hydromotoren 3 und 4 entsprechend der Geschwindigkeitsvorgabe des Fahrhebels 8 eingestellt.

Für die Erkennung verschiedener Fahrzustände sind ein erster und eine zweiter Drucksensor 10 und 11 eingangsseitig mit der elektronischen Steuereinheit 9 verbunden. Die Drucksensoren 10 und 11 sind an den Hauptleitungen 6 und 7 angeordnet. Je nach Fahrtrichtung und Bergfahrt oder Talfahrt wechselt die Hauptleitung 6 und 7 ihre Funktion als förderseitige Leitung in saugseitige Leitung und umgekehrt, weswegen die beiden Drucksensoren 10 und 11 identisch aufgebaut sind.

Für die folgenden Ausführungen wird angenommen, daß die Hauptleitung 6 die förderseitige Leitung ist und sich das Fahrzeug so an einer Steigung befindet, daß der Hydromotor 3, die Abtriebswelle 1 und die Bandage 12 die Bergseite des Fahrzeugs bilden.

Fährt das Fahrzeug die Steigung hinauf, erhöht sich der Druck in der Hauptleitung 6. Übersteigt der Hauptleitungsdruck dabei einen festgelegten Druckschwellwert, so erkennt die elektronische Steuereinheit 9 eine Bergfahrt. Um die sich ändernden Belastungszustände der Bandage 12 und des Rades 13 gegenüber einer Fahrt in der Ebene und der damit verbundenen Änderung der Haftung mit dem Untergrund zu kompensieren, wird der Schwenkwinkel des bergseitigen Hydromotors 3 in Richtung eines kleineren Schluckvermögens verstellt und so das übertragene Moment verringert. Der Neigung zur. Schlupfbildung wird entgegengesteuert.

Die Verstellung des Schwenkwinkels erfolgt dabei proportional zu der Druckerhöhung in der Hauptleitung 6. Zur Vermeidung von Fehlsteuerungen bei einem Druckanstieg in der Hauptleitung 6 wird der Druckschwellwert bei einer Änderung der Position des Fahrhebels 8 korrigiert. Wird der Fahrhebel 8 in Richtung der aktuellen Fahrt weiter ausgelenkt, so führt die Beschleunigung zu einer Druckerhöhung in der Hauptleitung 6. Die Korrektur erhöht den Druckschwellwert, so daß der in der förderseitigen Hauptleitung 6 herrschende Druck nicht zu einer Überschreitung des korrigierten Druckschwellwerts führt. Entsprechend wird für eine Zurücknahme der Fahrhebelauslenkung der Druckschwellwert zu kleineren Werten hin korrigiert. Auch bei einer Verlangsamung der Fahrgeschwindigkeit bergauf kann die Bergfahrt erkannt werden, da der tatsächliche Druckwert in der bergseitigen Hauptleitung 6, der durch die Verzögerung verringert wird, über dem korrigierten Druckschwellwert liegt.

Zur Erkennung einer Talfahrt wird in entsprechender Weise ein Druckschwellwert für die saugseitige Hauptleitung 7 festgelegt, der sich von dem förderseitigen Druckschwellwert unterscheiden kann. Die Höhe der Druckschwellwerte legt die Auslöseschwelle im Sinne einer minimalen Steigung fest. Vorzugsweise werden die Druckschwellwerte in einem Speicher der elektronischen Steuereinheit 9 abgelegt, so daß sie bei Bedarf durch z.B. ein Servicegerät veränderbar sind. Dadurch kann eine Anpassung erfolgen, beispielsweise an veränderte Einsatzbedingungen des Fahrzeugs. Wird aufgrund einer Überschreitung des Druckschwellwerts durch den saugseitigen Druck eine Talfahrt durch die elektronische Steuereinheit 9 registriert, so wird wiederum als prophylaktische Maßnahme der Schwenkwinkel des bergseitigen Hydromotors 3 zu kleineren Winkel und damit geringerem Schluckvermögen verstellt. Der Schwenkwinkel des talseitigen Hydromotors 4 bleibt von der Steuerung unbeeinflußt, wodurch kein Verlust an Bremsleistung eintritt. Das durch die Verstellung des bergseitigen Hydromotors 3 verringerte übertragbare Moment resultiert in einer ebenfalls verringerten Blockierneigung.

Die Anpassung des Druckschwellwerts für die saugseitige Hauptleitung 7 erfolgt in identischer Weise wie in der vorstehenden Beschreibung für die förderseitige Hauptleitung 6 bei der Bergfahrt erläutert.

Zur Veränderung des Schwenkwinkels der beiden Hydromotoren 3 und 4 gemäß der vorstehend beschriebenen Steuerung wird von einer idealen Haftreibung ausgegangen. Das Verschwenken kompensiert dabei die durch die Änderung der Normalkräfte an der Bandage 12 und dem Rad 13 übertragbaren Brems- und Antriebskräfte. Durch Änderung der Beschaffenheit des Untergrunds, beispielsweise durch Nässe, kann es dennoch zur Entstehung von Schlupf kommen. Dieser muß nicht notwendigerweise auf der Bergseite auftreten.

Um den Schlupf erkennen zu können, sind auf den Abtriebsseiten der beiden Hydromotoren 3 und 4 jeweils ein Drehzahlsensor 14 und 15 angebracht. Das Signal der Drehzahlsensoren 14 und 15 ist eingangsseitig mit der elektronischen Steuereinheit 9 verbunden. Die elektronische Steuereinheit 9 wertet die Änderung des Verhältnisses der beiden Signale aus. Bei einer Änderung des Signalverhältnisses liegt an einer der Achsen Schlupf vor. Durch die Auswertung des Signalverhältnisses erübrigt sich die Umrechnung einer Drehzahl in eine Lineargeschwindigkeit. Der Eingriff in die Schwenkwinkel der Hydromotoren 3 und 4 erfolgt in Abhängigkeit von der jeweils ermittelten Fahrsituation, wobei die Fahrsituation wie bereits beschrieben ermittelt wird und zwischen Bergfahrt, Talfahrt und Fahrt in der Ebene unterscheidet.

Zur Beschreibung der Verfahrensweise sei wiederum angenommen, daß die Bandage 12 sich auf der Bergseite befindet. Der dementsprechend bergseitige Drehzahlsensor 14 liefert ein Drehzahlsignal A, der talseitige Drehzahlsensor 15 ein Drehzahlsignal B.

Bei einer Änderung des Verhältnisses der Drehzahlsignale A und B erkennt die elektronische Steuereinheit 9, daß an einer der Achsen Schlupf auftritt. Die Regelung der Schwenkwinkel erfolgt je nach Fahrsituation.

Fährt das Fahrzeug eine Steigung hinauf und das Verhältnis der Drehzahlsignale ändert sich, wird von dem elektronischen Steuergerät 9 zunächst ermittelt, an welcher Achse Schlupf auftritt. Für die nachfolgende Beschreibung wird von einer durchrutschenden Bandage 12 und damit von einer Erhöhung des Drehzählsignals A ausgegangen. Bei steigendem Verhältnis der Drehzahlsignale A/B ist das Moment an dem bergseitigen Hydromotor 3 zu groß. Als Reaktion wird in einem ersten Schritt der Schwenkwinkel des talseitigen Hydromotors 4 in Richtung eines größeren Schluckvermögens gestellt und damit das Moment an dem Rad 13 vergrößert. Als zweiter Schritt, oder wenn der talseitige Hydromotor 4 bereits auf großem Schwenkwinkel steht, wird der bergseitige Hydromotor 3 in Richtung eines kleineren Schluckvermögens verschwenkt. Die Regelung der Schwenkwinkel für die Fahrt in der Ebene ist identisch mit der Regelung bei Bergfahrt.

Bei einer Talfahrt und sich änderndem Verhältnis der Drehzahlsignale A/B wird zunächst ermittelt, welcher der Hydromotoren 3, 4 im Verhältnis langsamer dreht. In der Regel neigt der bergseitige Hydromotor 3 zum Überbremsen, während der talseitige Hydromotor 4 noch keinen Schlupf aufweist. Der Schwenkwinkel des relativ schneller drehenden, d. h. des sog. "überholenden" Hydromotors 4 wird in Richtung größerer Winkel verstellt. Steht der Hydromotor 4 bereits auf großem Schwenkwinkel, so wird der Schwenkwinkel des relativ langsameren Hydromotors 3 auf kleinere Schwenkwinkel verstellt. Die elektronische Steuereinheit 9 wertet die Fahrsituation aus und erkennt aus der Änderung der Position des Fahrhebels 8, ob sich das Fahrzeug in einem Verzögerungs- bzw. Anhalte- oder Reversiervorgang befindet.

Bei extrem gebremster Bergabfahrt an großen Steigungen kann es trotz Reglereingriff zu einer Umkehr der Drehrichtung des bergseitigen Hydromotors 3 kommen. Die Drehrichtung wird von den Drehzahlsensoren 10, 11 detektiert und an die elektronische Steuereinheit 9 geleitet. Dabei hat z.B. das Drehzahlsignal der entgegen der vorgegebenen Fahrtrichtung drehenden Achse ein negatives Vorzeichen. Wird ein Drehsinn entgegen der Fahrtrichtung von der elektronischen Steuereinheit 9 registriert, so wird der Schwenkwinkel des entsprechenden Hydromotors 3 sofort in Neutralstellung gestellt. Danach kann der Schwenkwinkel beispielsweise entlang einer vordefinierten Rampe wieder auf einen Wert gestellt werden, der dem vorgegebenen Sollwert der Fahrgeschwindigkeit und Fahrsituation entspricht.

Die vorstehende Beschreibung bezieht sich jeweils auf ein Fahrzeug, dessen Bandage 12 zur Hergseite hin orientiert ist. Das Traktionssteuersystem ist unabhängig von der Orientierung des Fahrzeugs zur Steigung und arbeitet für ein Fahrzeug, das mit dem Rad 13 zum Berg hin orientiert ist analog. Die elektronische Steuereinheit 9 ermittelt aufgrund des Signals der Drehzahlsensoren 10, 11, das neben der Drehzahl die aktuelle Drehrichtung der Hydromotoren 3, 4 angibt, welcher der Hydromotoren 3, 4 der Bergseite bzw. der Talseite zuzuordnen ist.

## Patentansprüche

1. Traktionssteuersystem für ein hydrostatisch angetriebenes Fahrzeug mit einer vorderen und einer hinteren Achse, die von einem ersten und einem zweiten Hydromotor (3, 4) angetrieben sind, die mit einer gemeinsamen Hydropumpe (5) über Hauptleitungen (6, 7) versorgt werden, wobei der Schwenkwinkel der Hydropumpe (5) von einer Neutralstellung ausgehend in beide Richtungen verstellbar ist, die Schwenkwinkel der beiden Hydromotoren (3, 4) in jeweils zumindest eine Richtung verschwenkbar sind und wobei in den Hauptleitungen (6, 7) jeweils ein Drucksensor (10, 11) angeordnet ist,
**dadurch gekennzeichnet,**
**daß** die Größen der Schwenkwinkel von einer elektronischen Steuereinheit (9) bestimmbar sind, die von Drehzahlsensoren (10, 11), die jeweils an der Abtriebsseite der Hydromotoren (3, 4) angeordnet sind, jeweils einen Istwert der Drehzahl und Drehrichtung des jeweiligen Hydromotors (3, 4) und von einem Fahrhebel (8) ein Positionssignal erhält und von jedem Drucksensor (10, 11) ein Drucksignal an die elektronische Steuereinheit (9) übermittelt wird, welche
durch den Verlauf der Signale der Drucksensoren (10, 11) und des Fahrhebels (8) die Fahrsituation als Bergfahrt, Talfahrt oder Fahrt in der Ebene erkennt und abhängig von der Fahrsituation die Schwenkwinkel der Hydromotoren steuert.

2. Traktionssteuersystem nach Anspruch 1,
**dadurch gekennzeichnet,**
**daß** die elektronische Steuereinheit (9) eingerichtet ist, um proportional einer Druckerhöhung in der förder- oder saugseitigen Hauptleitung (6 oder 7) den bergseitigen Hydromotor (3 oder 4) bei erkannter Berg- oder Talfahrt in Richtung kleinerer Schwenkwinkel zu steuern.

3. Traktionssteuersystem nach Anspruch 2,
**dadurch gekennzeichnet,**
**daß** die Proportionalität zwischen Schwenkwinkel und Druckerhöhung so eingestellt ist, daß bei maximaler Haftreibung zwischen dem Untergrund und der bergseitigen Achse der Druck in der förderseitigen oder saugseitigen Hauptleitung (6 oder 7) nicht über einen vordefinierten Maximaldruck steigt.

4. Traktionssteuersystem nach Anspruch 2 oder 3,
**dadurch gekennzeichnet,**
**daß** die elektronische Steuereinheit (9) eingerichtet ist, um die Schwenkwinkel des talseitigen Hydromotors (4 oder 3) und der Hydropumpe (5) zum Konstanthalten der Fahrgeschwindigkeit entsprechend zu regeln.

5. Traktionssteuersystem nach einem der Ansprüche 1 bis 4,
**dadurch gekennzeichnet,**
**daß** die elektronische Steuereinheit (9) eingerichtet ist, um bei erkannter Bergfahrt und bei sich änderndem Verhältnis der Drehzahlsignale von den beiden Drehzahlsensoren (10, 11) den Schwenkwinkel des überholten Hydromotors (3 oder 4) in Richtung größerer Schwenkwinkel und/oder den Schwenkwinkel des überholenden Hydromotors (4 oder 3) in Richtung kleinerer Schwenkwinkel zu regeln.

6. Traktionssteuersystem nach einem der Ansprüche 1 bis 5,
**dadurch gekennzeichnet,**
**daß** die elektronische Steuereinheit (9) eingerichtet ist, um bei erkannter Talfahrt und sich änderndem Verhältnis der Drehzahlsignale von den beiden Drehzahlsensoren (10, 11) den Schwenkwinkel des überholenden Hydromotors (3 oder 4) in Richtung größerer Schwenkwinkel und/oder den Schwenkwinkel des überholten Hydromotors (4 oder 3) in Richtung kleinerer Schwenkwinkel zu regeln.

7. Traktionssteuersystem nach einem der Ansprüche 1 bis 6,
**dadurch gekennzeichnet,**
**daß** die elektronische Steuereinheit (9) eingerichtet ist, um bei erkannter Fahrt in der Ebene die Ansteuerung der Schwenkwinkel proportional einem Druckanstieg in einer der Hauptleitungen (6, 7) auszusetzen.

8. Traktionssteuersystem nach einem der Ansprüche 1 bis 7,
**dadurch gekennzeichnet,**
**daß** die elektronische Steuereinheit (9) eingerichtet ist, um bei erkannter Fahrt in der Ebene und sich änderndem Verhältnis der Drehzahlsignale der beiden Drehzahlsensoren der Schwenkwinkel des überholten Hydromotors (3 oder 4) in Richtung größerer Schwenkwinkel und/oder der Schwenkwinkel des überholenden Hydromotors (4 oder 3) in Richtung kleinerer Schwenkwinkel zu regeln.

9. Verfahren zur Traktionsverbesserung eines hydrostatisch angetriebenen Fahrzeugs mit einer vorderen und einer hinteren Achse, die von einem ersten und einem zweiten Hydromotor (3, 4) angetrieben werden, wobei der Schwenkwinkel einer über Hauptleitungen (6, 7) mit den Hydromotoren (3, 4) verbundenen Hydropumpe (5) von einer Neutralstellung ausgehend in beide Richtungen verstellbar ist, die Schwenkwinkel der beiden Hydromotoren (3, 4) in zumindest eine Richtung verschwenkbar sind und die Größen der Schwenkwinkel von einer elektronischen Steuereinheit (9) bestimmbar sind, die von Drehzahlsensoren (10, 11), die jeweils an der Abtriebsseite der Hydromotoren (3, 4) angebracht sind, jeweils einen Istwert der Drehzahl und Drehrichtung des jeweiligen Hydromotors (3, 4) und von einem Fahrhebel (8) ein Positionssignal erhält,
mit folgenden Verfahrensschritten:
- Messen des in den Hauptleitungen (6, 7) vorliegenden Drucks mit Drucksensoren (10, 11) und Übermitteln dieser Meßsignale an die elektronische Steuereinheit (9);
- Übermitteln der Position des Fahrhebels (9);
- Korrigieren eines vorab festgelegten Druckschwellwertes bei Änderung der Position des Fahrhebels (9) entsprechend einer Beschleunigung, so daß eine durch einen Beschleunigungsvorgang verursachte Druckänderung in einer der Hauptleitungen (6, 7) nicht zu einer Überschreitung des korrigierten Druckschwellwerts führt;
- Vergleichen der Meßsignale der gemessenen Druckwerte mit dem korrigierten Druckschwellwert und Ermitteln der Fahrsituation, wobei eine Überschreitung des Druckschwellwerts in der förderseitigen Hauptleitung (6, 7) eine Bergfahrt, eine Überschreitung des Druckschwellwerts in der saugseitigen Hauptleitung (6, 7) eine Bergabfahrt und ein Nicht-Überschreiten eine Fahrt in der Ebene anzeigt;
- Zuordnen der Hydromotoren (3, 4) zu Berg- oder Talseite durch Auswerten der Drehrichtung und der Fahrsituation durch die elektronische Steuereinheit (9); und
- Verringern des Schwenkwinkels des bergseitigen Hydromotors (3, 4) bei ermittelter Berg- oder Talfahrt.

10. Verfahren nach Anspruch 9,
**dadurch gekennzeichnet,**
**daß** bei Änderung des Verhältnisses der Abtriebsdrehzahlen der Hydromotoren (3, 4) bei erkannter Talfahrt der Schwenkwinkel des überholten Hydromotors (3 oder 4) in Richtung kleinerer Schwenkwinkel verstellt wird.

11. Verfahren nach Anspruch 9 oder 10,
**dadurch gekennzeichnet,**
**daß** bei Änderung des Verhältnisses der Abtriebsdrehzahlen der Hydromotoren (3, 4) bei erkannter Bergfahrt der Schwenkwinkel des überholenden Hydromotors (3 oder 4) in Richtung kleinerer Schwenkwinkel verstellt wird.

12. Verfahren nach Anspruch 9 bis 11,
**dadurch gekennzeichnet,**
**daß** bei erkannter Berg- oder Talfahrt und entgegengesetztem Drehsinn der Achsen der Schwenkwinkel des bergseitigen Hydromotors (3 oder 4) zunächst auf Null verstellt und anschließend auf einen Sollwert aus einer Geschwindigkeitsregelung gestellt wird.

13. Verfahren nach einem der Ansprüche 9 bis 12,
**dadurch gekennzeichnet,**
**daß** bei Änderung des Verhältnisses der Abtriebsdrehzahlen der Hydromotoren (3, 4) bei erkannter Fahrt in der Ebene der Schwenkwinkel des überholenden Hydromotors (3 oder 4) in Richtung kleinerer Schwenkwinkel verstellt wird.

## Claims

1. Traction control system for a hydrostatically driven vehicle having a front and a rear axle which are driven by a first and a second hydraulic motor (3, 4) which are supplied by a common hydraulic pump (5), via main lines (6, 7), the pivoting angle of the hydraulic pump (5) being adjustable in both directions, starting from a neutral position, the pivoting angles of the two hydraulic motors (3, 4) being able to be swivelled in, respectively, at least one direction, and a respective pressure sensor (10, 11) being disposed in the main lines (6,7),
**characterized in that**
the magnitudes of the pivoting angles can be determined by an electronic control unit (9) which, from rotational-speed sensors (10, 11) which are respectively disposed on the working side of the hydraulic motors (3, 4), respectively receives an actual value of the rotational speed and rotational direction of the respective hydraulic motor (3, 4), and receives a position signal from a driving lever (8), and a pressure signal is transmitted from each pressure sensor (10, 11) to the electronic control unit (9) which, by the course of the signals of the pressure sensors (10, 11) and of the driving lever (8), identifies the travel situation as travel on an ascending gradient, travel on a descending gradient or travel on the flat, and controls the pivoting angles of the hydraulic motors in dependence on the travel situation.

2. Traction control system according to claim 1,
**characterized in that**
the electronic control unit (9) is set up to control the hydraulic motor (3 or 4) on the ascending gradient side, in the case of identification of travel on an ascending or descending gradient, towards a lesser pivoting angle, in proportion to an increase of pressure in the delivery-side or suction-side main line (6 or 7).

3. Traction control system according to claim 2,
**characterized in that**
the proportionality between pivoting angle and increase of pressure is set such that, in the case of maximum cohesive friction between the ground and the axle on the ascending gradient side, the pressure in the delivery-side or suction-side main line (6 or 7) does not increase over a predefined maximum pressure.

4. Traction control system according to either of claims 2 or 3,
**characterized in that**
the electronic control unit (9) is set up to appropriately regulate the pivoting angle of the hydraulic motor (4 or 3) on the descending gradient side and of the hydraulic pump (5) to keep the travel speed constant.

5. Traction control system according to any one of claims 1 to 4,
**characterized in that**
the electronic control unit (9) is set up, in the case of identification of travel on an ascending gradient and in the case of a varying ratio of the rotational-speed signals from the two rotational-speed sensors (10, 11), to regulate the pivoting angle of the overtaken hydraulic motor (3 or 4) towards a greater pivoting angle and/or to regulate the pivoting angle of the overtaking hydraulic motor (4 or 3) towards a lesser pivoting angle.

6. Traction control system according to any one of claims 1 to 5,
**characterized in that**
the electronic control unit (9) is set up, in the case of identification of travel on a descending gradient and a varying ratio of the rotational-speed signals from the two rotational-speed sensors (10, 11), to regulate the pivoting angle of the overtaking hydraulic motor (3 or 4) towards a greater pivoting angle and/or to regulate the pivoting angle of the overtaken hydraulic motor (4 or 3) towards a lesser pivoting angle.

7. Traction control system according to any one of claims 1 to 6,
**characterized in that**
the electronic control unit (9) is set up, in the case of identification of travel on the flat, to discontinue the driving of the pivoting angles in proportion to an increase of pressure in one of the main lines (6, 7).

8. Traction control system according to any one of claims 1 to 7,
**characterized in that**
the electronic control unit (9) is set up, in the case of identification of travel on the flat and a varying ratio of the rotational-speed signals of the two rotational-speed sensors, to regulate the pivoting angle of the overtaken hydraulic motor (3 or 4) towards a greater pivoting angle and/or to regulate the pivoting angle of the overtaking hydraulic motor (4 or 3) towards a lesser pivoting angle.

9. Method for improving traction of a hydrostatically driven vehicle having a front and a rear axle which are driven by a first and a second hydraulic motor (3, 4), the pivoting angle of a hydraulic pump (5), which is connected to the hydraulic motors (3, 4) via main lines (6, 7), being adjustable in both directions, starting from a neutral position, the pivoting angles of the two hydraulic motors (3, 4) being able to be swivelled in at least one direction, and the magnitudes of the pivoting angles being able to be determined by an electronic control unit (9) which, from rotational-speed sensors (10, 11) which are respectively disposed on the working side of the hydraulic motors (3, 4), respectively receives an actual value of the rotational speed and rotational direction of the respective hydraulic motor (3, 4), and receives a position signal from a driving lever (8),
having the following method steps:
- measurement, by means of pressure sensors (10, 11), of the pressure present in the main lines (6, 7), and transmission of these measurement signals to the electronic control unit (9);
- transmission of the position of the driving lever (9);
- correction of a previously defined pressure threshold value in the case of variation of the position of the driving lever (9) according to an acceleration, such that a variation of pressure in one of the main lines (6, 7) caused by an acceleration operation does not result in the corrected pressure threshold value being exceeded;
- comparison of the measurement signals of the measured pressure values with the corrected pressure threshold value and ascertainment of the travel situation, exceeding of the pressure threshold value in the delivery-side main line (6, 7) indicating travel on an ascending gradient, exceeding of the pressure threshold value in the suction-side main line (6, 7) indicating travel on a descending gradient, and non-exceeding of the pressure threshold value indicating travel on the flat;
- assignment of the hydraulic motors (3, 4) to ascending or descending gradient side through evaluation of the direction of rotation and of the travel situation by the electronic control unit (9); and
- reduction of the pivoting angle of the hydraulic motor (3, 4) on the ascending gradient side in the case of ascertainment of travel on an ascending or descending gradient.

10. Method according to claim 9,
**characterized in that**
in the case of variation of the ratio of the output rotational speeds of the hydraulic motors (3, 4) in the case of identification of travel on a descending gradient, the pivoting angle of the overtaken hydraulic motor (3 or 4) is adjusted towards a lesser pivoting angle.

11. Method according to either of claims 9 or 10,
**characterized in that**
in the case of variation of the ratio of the output rotational speeds of the hydraulic motors (3, 4) in the case of identification of travel on an ascending gradient, the pivoting angle of the overtaking hydraulic motor (3 or 4) is adjusted towards a lesser pivoting angle.

12. Method according to any one of claims 9 to 11,
**characterized in that**
in the case of identification of travel on an ascending or descending gradient and an opposing direction of rotation of the axles, the pivoting angle of the hydraulic motor (3 or 4) on the ascending gradient side is first adjusted to zero and then set to a setpoint from a speed control.

13. Method according to any one of claims 9 to 12,
**characterized in that**
in the case of variation of the ratio of the output rotational speeds of the hydraulic motors (3, 4) in the case of identification of travel on the flat, the pivoting angle of the overtaking hydraulic motor (3 or 4) is adjusted towards a lesser pivoting angle.

## Revendications

1. Dispositif de commande de propulsion pour un véhicule à transmission hydrostatique avec un essieu avant et un essieu arrière qui sont entraînés par un premier et par un deuxième moteur hydraulique (3, 4) qui sont alimentés avec une pompe hydraulique commune (5) via des conduites principales (6, 7), l'angle de pivotement de la pompe hydraulique (5) étant réglable dans les deux sens à partir d'une position neutre, les angles de pivotement de chacun des deux moteurs hydrauliques (3, 4) pouvant être modifiés dans au moins un sens et un capteur de pression (10, 11) étant disposé dans chaque conduite principale (6, 7),
**caractérisé en ce que**
les grandeurs des angles de pivotement peuvent être déterminées par une unité de commande électronique (9) qui reçoit une valeur effective de la vitesse de rotation et du sens de rotation de chaque moteur hydraulique (3, 4) de chacun des capteurs de vitesse de rotation (10, 11) respectivement disposés sur le côté sortie des moteurs hydrauliques (3, 4) et un signal de position d'un levier roulement (8), et **en ce que** chaque capteur de pression (10, 11) transmet un signal de pression à l'unité de commande électronique (9), qui reconnaît la situation de roulement, à savoir montée, descente ou plat en fonction de l'évolution des signaux et commande les angles de pivotement des moteurs hydrauliques en fonction de la situation de roulement.

2. Dispositif commande de propulsion selon la revendication 1,
**caractérisé en ce que**
l'unité de commande électronique (9) est réglée pour commander le moteur hydraulique (3 ou 4) dans le sens d'un angle de pivotement plus petit proportionnellement à une augmentation de pression dans la conduite principale (6 ou 7) côté refoulement ou aspiration lorsqu'une montée ou une descente ont été reconnues.

3. Dispositif de commande de propulsion selon la revendication 2,
**caractérisé en ce que**
la proportionnalité entre l'angle de pivotement et l'augmentation de pression est réglée de telle manière qu'en cas de frottement statique maximal entre le sol et l'essieu côté montée, la pression dans la conduite principale (6 ou 7) côté refoulement ou aspiration ne dépasse pas une pression maximale préalablement définie.

4. Dispositif de commande de propulsion selon la revendication 2 ou 3,
**caractérisé en ce que**
l'unité de commande électronique (9) est réglée pour réguler les angles de pivotement du moteur hydraulique côté descente (4 ou 3) et de la pompe hydraulique (5) afin de maintenir une vitesse de roulement constante correspondante.

5. Dispositif de commande de propulsion selon une des revendications 1 à 4,
**caractérisé en ce que**
l'unité de commande électronique (9) est réglée pour réguler l'angle de pivotement du moteur hydraulique dépassé (3 ou 4) dans le sens d'un angle de pivotement plus grand et/ou l'angle de pivotement du moteur hydraulique qui dépasse (4 ou 3) dans le sens d'un angle de pivotement plus petit lorsqu'une montée a été reconnue et que la proportion des signaux de vitesse de rotation des deux capteurs de vitesse de rotation (10, 11) change.

6. Dispositif de commande de propulsion selon une des revendications 1 à 5,
**caractérisé en ce que**
l'unité de commande électronique (9) est réglée pour réguler l'angle de pivotement du moteur hydraulique qui dépasse (3 ou 4) dans le sens d'un angle de pivotement plus grand et/ou l'angle de pivotement du moteur hydraulique dépassé (4 ou 3) dans le sens d'un angle de pivotement plus petit lorsqu'une descente a été reconnue et que la proportion des signaux de vitesse de rotation des deux capteurs de vitesse de rotation (10, 11) change.

7. Dispositif de commande de propulsion selon une des revendications 1 à 6,
**caractérisé en ce que**
l'unité de commande électronique (9) est réglée pour stopper la commande des angles de pivotement proportionnellement à une augmentation de pression dans une des conduites principales (6, 7) lorsqu'un déplacement sur du plat est détecté.

8. Dispositif de commande de propulsion selon une des revendications 1 à 7,
**caractérisé en ce que**
l'unité de commande électronique (9) est réglée pour réguler l'angle de pivotement du moteur hydraulique dépassé (3 ou 4) dans le sens d'un angle de pivotement plus grand et/ou l'angle de pivotement du moteur hydraulique dépassé (4 ou 3) dans le sens d'un angle de pivotement plus petit lorsqu'un déplacement sur du plat a été détecté et que la proportion entre les signaux de vitesse de rotation des deux capteurs de vitesse de rotation change.

9. Procédé d'amélioration de la propulsion d'un véhicule à transmission hydrostatique avec un essieu avant et un essieu arrière qui sont entraînés par un premier et par un deuxième moteur hydraulique (3, 4), l'angle de pivotement d'une pompe hydraulique (5) reliée aux moteurs hydrauliques (3, 4) via des conduites principales (6, 7) pouvant être modifié dans les deux sens à partir d'une position neutre, les angles de pivotement des deux moteurs hydrauliques (3, 4) pouvant être modifiés dans au moins un sens et les grandeurs des angles de pivotement pouvant être déterminées par une unité de commande électronique (9) qui reçoit de chaque capteur de vitesse de rotation (10, 11) disposé sur le côté sortie des moteurs hydrauliques (3, 4) une valeur effective de la vitesse de rotation et du sens de rotation de chaque moteur hydraulique (3, 4) et un signal de position d'un levier de roulement (8),
avec les étapes de procédé suivantes :
- mesure de la pression qui règne dans les conduites principales (6, 7) avec des capteurs de pression (10, 11) et transmission de ces signaux de mesure à l'unité de commande électronique (9) ;
- transmission de la position du levier d'accélérateur (8) ;
- correction d'une valeur seuil de pression en cas de modification de la position du levier d'accélérateur (8) en fonction d'une accélération, de telle manière qu'une modification de pression dans une des conduites principales (6, 7) due à une accélération n'entraîne pas un dépassement de la valeur seuil de pression corrigée ;
- comparaison des signaux de mesure des valeurs de pression mesurées avec la valeur seuil de pression corrigée et détermination de la situation de conduite, un dépassement de la valeur seuil de pression dans la conduite principale (6, 7) côté refoulement indiquant une montée, un dépassement de la valeur seuil de pression dans la conduite principale (6, 7) côté aspiration une descente et une absence de dépassement un déplacement sur du plat ;
- affectation des moteurs hydrauliques (3, 4) au côté montée ou descente par évaluation du sens de rotation et de la situation de conduite par l'unité de commande électronique (9) ; et
- réduction de l'angle de pivotement du moteur hydraulique (3, 4) côté montée lorsqu'une montée ou une descente ont été détectées.

10. Procédé selon la revendication 9,
**caractérisé en ce que**,
en cas de modification du rapport des vitesses de sortie des moteurs hydrauliques (3, 4) lorsqu'une descente a été détectée, l'angle de pivotement du moteur hydraulique (3 ou 4) dépassé est modifié dans le sens d'un angle de pivotement plus petit.

11. Procédé selon la revendication 9 ou 10,
**caractérisé en ce que**,
en cas de modification du rapport des vitesses de sortie des moteurs hydrauliques (3, 4) lorsqu'une descente a été détectée, l'angle de pivotement du moteur hydraulique (3 ou 4) qui dépasse est modifié dans le sens d'un angle de pivotement plus petit.

12. Procédé selon les revendications 9 à 11,
**caractérisé en ce que**,
lorsqu'une montée ou une descente a été détectée et en cas de sens de rotation opposé des essieux, l'angle de pivotement du moteur hydraulique (3 ou 4) côté montée est d'abord modifié sur zéro puis réglé sur une valeur de consigne résultant d'une régulation de la vitesse.

13. Procédé selon une des revendications 9 à 12,
**caractérisé en ce que**,
en cas de modification du rapport des vitesses de rotation des moteurs hydrauliques (3, 4) côté sortie, lorsqu'un déplacement sur du plat a été détecté, l'angle de pivotement du moteur hydraulique (3 ou 4) qui dépasse est modifié dans le sens d'un angle de pivotement plus petit.
